# EUROPÄISCHE PATENTSCHRIFT

(11) **EP 4 087 103 B1**
(45) Veröffentlichungstag und Bekanntmachung des Hinweises auf die Patenterteilung: **12.02.2025**
(21) Anmeldenummer: 21171873.9
(22) Anmeldetag: 03.05.2021
(51) Int. Cl.: H02K 49/04, B60L 13/00, B60L 13/10, B60L 13/03

(54) **LINEARANTRIEB**
LINEAR DRIVE
ENTRAÎNEMENT LINÉAIRE

(43) Veröffentlichungstag der Anmeldung: 09.11.2022
(73) Patentinhaber: InDriveTec AG, 8050 Zürich (CH)
(72) Erfinder: JULEN, Eric, 8052 Zürich (CH); VINZENS, Martin, 8050 Zürich (CH)
(74) Vertreter: Leimgruber, Fabian Alfred Rupert

(56) Entgegenhaltungen:
- EP-B1- 2 269 289
- WO-A1-2015/191935
- JP-A- H05 336 616
- JP-A- H09 261 805
- US-A1- 2003 205 163

## Beschreibung

### Technisches Gebiet

Die vorliegende Erfindung fällt in den technischen Bereich von elektrischen Antrieben für spurgeführte Landverkehrsmittel bzw. Schienenfahrzeuge; sie betrifft vorliegend einen Linearantrieb für den Betrieb eines Fahrzeugs entlang eines Streckenabschnitts einer Fahrstrecke gemäss dem Oberbegriff des Anspruchs 1.

### Stand der Technik, technologischer Hintergrund der Erfindung

Ein Linearantrieb oder Linearmotor ist eine elektrische Antriebsmaschine, bei der im Gegensatz zu bekannten, rotierenden Maschinen, die angetriebenen Objekte nicht in eine drehende Bewegung versetzt werden, sondern auf einer geradlinigen oder gekurvten Bahn verschoben werden. Konsequenterweise spricht man bei Linearantrieben also nicht von einer Rotationsbewegung, sondern von einer Translationsbewegung.

Eine bekannte Anwendung solcher Linearantriebe liegt bei Achterbahnen seit Jahrzehnten vor; typischerweise werden dabei Achterbahnzüge im Zwei-Minuten-Takt von einem elektromagnetischen Linearantrieb in ein Schienenknäuel aus Stahlrohren katapultiert, wobei ein solcher tonnenschwere Achterbahnzug seine Initialenergie auf einer rund 50 Meter langen Katapultstrecke mittels etwa 100 paarweise installierten linearen Induktionsmotoren -auch LIM genannt- erhält. Ein solcher LIM war und ist dabei eine konsequente Weiterentwicklung eines kontaktlosen Beschleunigungssystems mit dem Ziel einer weitgehend mechanischen Wartungsfreiheit. Des Weiteren finden LIM auch in mechanischen Antrieben von Türsystemen -wie in Supermärkten beispielsweise- oder bei Personenbeförderungsbänder und Gepäckbändern an Flughäfen Verwendung.

Auch andere elektromagnetische Funktionsprinzipien sind bei Achterbahnen von Interesse, und zwar werden dabei die linearen Induktionsmotoren abgelöst durch lineare Synchronmotoren -auch LSM genannt- deren Wirkungsgrad vergleichsweise höher ist als bei den LIM. Führende Anbieter von Achterbahnen greifen dabei vielfach auf durchschlagsstarke LSM Beschleunigungsbahnen zurück, die Spitzengeschwindigkeiten von rund 180 Stundenkilometern meistern.

Der lineare Induktionsmotor entstammt in seiner Funktionsweise dem Wechselstrommotor. Der einzige und auffälligste Unterschied liegt darin, dass statt einer rotatorischen eine translatorische Bewegung erzeugt wird. Die im Wechselstrommotor kreisförmig angeordneten Statorspulen werden dazu auf einer ebenen, linearen Strecke platziert. Der "Läufer", der im Wechselstrommotor rotiert, wird beim linearen Synchronmotor über eine geradlinige Strecke bewegt. Wird durch einen Kupferdraht ein Strom geleitet, so entsteht um diesen ein magnetisches Feld. Dessen Feldstärke ist vom angelegten Strom abhängig. Um das erzeugte Magnetfeld zu maximieren und in seiner Ausbreitungsrichtung geometrisch zu kontrollieren, wird der Kupferdraht um einen länglichen Eisenkern -dem Ferritkern- gewickelt, wobei selbstverständlich auch eine eisenlose Ausführungsform denkbar ist. Es entsteht eine Spule, welche bei angelegtem Strom gleiche Eigenschaften wie ein Permanentmagnet besitzt. An den jeweiligen Enden des Ferritkerns entsteht ein Nord- und ein Südpol. Beim Linearmotor sind viele derartige Spulen in einer Reihe hintereinandergeschaltet. Entlang einer Schiene sind dazu über eine gesamte Beschleunigungsstrecke bzw. Katapultstrecke Motormodule mit dreiphasigen Spulen -den Statoren- angeordnet, die um einen etwa 20 Millimeter breiten linearen Luftspalt gruppiert sind. Der Motor besitzt dabei eine Länge von etwa einem Meter. Am Zug befindet sich eine Kupfer- oder Aluminiumschiene als Reaktionsschiene als sogenannter Läufer, welche Reaktionsschiene vom LIM Motor berührungslos durch den Spalt gezogen wird. Das Funktionsprinzip des Antriebs folgt dabei dem Gesetz der Induktion. Eine angelegte Wechselspannung erzeugt in den Spulen des Linearmotors ein wanderndes Magnetfeld mit ständigem Wechsel der Polarität zwischen Nord und Süd. Das Wanderfeld bewegt sich entlang der Katapultstrecke, seine Fortbewegungsgeschwindigkeit wird durch die Frequenz des angelegten Stroms bestimmt. Das im Stator angelegte magnetische Wanderfeld induziert im "Läufermedium" eine elektrische Spannung, die die freien Elektronen in der Reaktionsschiene in Bewegung versetzt. Dieser Elektronenfluss erzeugt wiederum ein Magnetfeld. Beide Magnetfelder interagieren miteinander, ungleiche Pole ziehen sich an, gleiche Pole stoßen sich ab. Durch die Wechselwirkung der beiden Magnetfelder entsteht eine Kraftkomponente in Richtung des Wanderfeldes, welche den Achterbahnzug in Bewegung setzt. Die translatorische Antriebskraft ist vorliegend abhängig von der Relativgeschwindigkeit Δv zwischen dem Zug und dem Wandermagnetfeld. Sind beide gleich schnell, wird kein Gegenmagnetfeld erzeugt und die Beschleunigung ist gleich null.

Während der Beschleunigungsphase ist die Geschwindigkeit des Zuges -und damit des Läufer- stets kleiner als die des antreibenden Statorfeldes. Das in den Läufern erzeugte Magnetfeld bewegt sich also über die Reaktionsschiene und springt sogar über benachbarte Reaktionsschienen von Wagen zu Wagen. Würden die Geschwindigkeiten des Statorfeldes und des Zuges gleich sein, so würde im Läufer keine Spannung induziert und die den Zug antreibende Kraft nicht mehr aufrechterhalten. Würde die Geschwindigkeit des Zuges sogar größer als die des Statorfeldes, so würde die Kraftrichtung drehen und der Zug abgebremst werden. Derartige Zusammenhänge resultieren bekanntermassen aus dem physikalischen Induktionsgesetz.

Einen bekannten Linearantrieb offenbart die Druckschrift EP 3 107 195 A1; sie betrifft ein Linearmotorantriebssystem zur Beschleunigung eines Fahrzeugs innerhalb eines Beschleunigungsabschnitts auf einer Fahrtrasse. Das Linearmotorantriebssystem umfasst einen Stator mit mindestens zwei längs der Fahrtrasse angeordneten Statorelementen, wobei die Statorelemente zu Statorgruppen zusammengefasst sind. Ferner umfasst das Linearmotorantriebssystem einen Läufer, welcher am Fahrzeug befestigt ist. Dabei ist jede Statorgruppe mit einem eigenen Energiewandler zur Energieversorgung permanent verbunden, welcher Energiewandler einzeln angesteuert werden kann. Mindestens zwei der Statorgruppen sind derart angeordnet, dass der Läufer gleichzeitig mit diesen zwei Statorgruppen wechselwirken kann. Das hier vorliegende Linearmotorantriebssystem ist zur Beschleunigung eines Fahrzeugs zum Personentransport in einer Vergnügungsanlage wie beispielsweise einer Achterbahn geeignet. In der Druckschrift EP 2 269 289 B1 wird eine Transportvorrichtung auf der Basis eines Wirbelstromantriebs beschrieben. Die Vorrichtung umfasst eine Schiene und zwei parallel angeordnete Drehscheiben, die von einem Elektromotor angetrieben werden. Die Drehscheiben sind um ihren Umfang mit Magneten versehen. Der Antrieb ist z. B. für schienengeführte Wagen vorgesehen. Weiter ist aus der Druckschrift US 2003/205163 A1 ein System beschrieben, mit dem Wagen zum Schweben gebracht und beschleunigt werden können. In der Druckschrift WO 2015/191935 A1 ist ein Antrieb und eine Steuerung für ein magnetisches Anheben eines Fahrzeugs beschrieben. Ein Schwebetriebwerk weist hierfür rotierende Scheiben auf, die mit Magneten versehen sind, und in einer Basis Wirbelströme induzieren. Die Druckschrift JP H09 261805 A offenbart einen magnetischen Schwebeantrieb, bei dem rotierende Magnetscheiben gegenüber einer Leiterbahn angeordnet sind und ein Fahrzeug anheben und linear entlang der Bahn antreiben.

### Darstellung der Erfindung

Es ist Aufgabe der vorliegenden Erfindung, einen Linearantrieb dahingehend weiterzuentwickeln, dass ein einfacherer und effizienterer Systemaufbau dieses Linearantriebs ermöglicht wird, der eine raumsparendere Gesamtsysteminstallation im Vergleich zu herkömmlichen Linearantrieben aufweist.

Die dieser Erfindung für den Linearantrieb zugrundeliegende Aufgabe wird gelöst durch die Merkmale des Anspruchs 1; die diesen Erfindungsgedanken weiterbildenden Merkmale sind Gegenstand der Unteransprüche 2 bis 11.

Der Kern der vorliegenden Erfindung ist darin zu sehen, dass ein Linearantrieb ein Primärteil und ein hierzu magnetisch in Wirkverbindung stehendes Sekundärteil umfasst, wobei das Primärteil als mindestens eine erste Reaktionsschiene ausgebildet ist und das Sekundärteil eine Anzahl Magnete umfasst, wobei das Sekundärteil ein erstes magnetisches Rad und mindestens ein hierzu parallel angeordnetes, zweites magnetisches Rad umfasst und die Anzahl Magnete an dem ersten magnetischen Rad und dem zweiten magnetischen Rad angeordnet sind, und wobei die mindestens eine erste Reaktionsschiene zwischen dem ersten magnetischen Rad und dem zweiten magnetischen Rad angeordnet ist und mit diesen magnetisch wirkverbunden ist. Das Sekundärteil ist mit einem Rotationsantrieb mechanisch verbunden, so dass, bei Inbetriebnahme des Linearantriebs, durch Rotation des Sekundärteils Wirbelströme in der Reaktionsschiene entstehen, wobei eine Antriebskraft resultiert und das Sekundärteil relativ zum Primärteil translatorisch angetrieben wird. Das Sekundärteil sowie das erste magnetische Rad (3a) und das zweite magnetische Rad (3b) sind horizontal angeordnet. Bei Inbetriebnahme des Linearantriebs, resultiert neben der translatorischen Antriebskraft eine weitere Hubkraft, die zu einer Anhebung der ersten und zweiten Räder gegenüber dem Primärteil führt.

Zusammenfassend ist festhaltbar, dass die durch die Magnete am Umfang des Sekundärteils wechselweise ausgerichteten Magnetfelder durch die Rotation des Rotationsantriebs gegenüber dem Primärteil derart in Bewegung sind, dass sich in dem als Reaktionsschiene ausgestalteten Primärteil Wirbelströme I ausbilden, die wiederum in Verbindung mit diesen wechselweise ausgerichteten Magnetfeldern derart wechselwirken, dass folglich eine gewünschte, mechanische Kraft bereitgestellt wird; dem Primärteil wird also mittels des rotierbaren Sekundärteils "quasi eine unendliche Längenausdehnung desselben vorgetäuscht". Somit umfasst die eine Teilsysteminstallation hinsichtlich des Sekundärteils im Wesentlichen die Magneträder mit dem sie antreibenden Rotationsantrieb in einer kompakten Einheit, die in einem Bereich eines Fahrzeugs konzentriert angeordnet werden kann und darüber hinaus über die gesamte Fahrstrecke nutzbar zur Verfügung steht und an jeder Stelle der Fahrstrecke, an dem das Primärteil angeordnet ist, mit diesem in Wechselwirkung treten, und zwar sowohl (positiv) beschleunigend als auch bremsend. Selbstverständlich sind pro Fahrzeug auch mehrere dieser Magnetradsysteme installierbar, womit die gesamte Systemleistung erhöht werden kann und/oder die mehreren Antriebseinheiten bei vorgegebener Gesamtsystemleistung kleiner ausgeführt werden können.

Besonders vorteilhaft ist dabei, dass mit der Erfindung ein massgeblich kürzerer Sekundärteil in Bezug auf die Länge bekannter Fahrzeuge möglich ist als herkömmliche Sekundärteile, die häufig auch annähernd entlang einer gesamten Fahrzeuglänge angeordnet werden.

Mittels einer steuerbaren Rotationsgeschwindigkeit des Rotationsantriebs, ist der Betrag der Vortriebskraft einstellbar; die Drehrichtung -vorwärts bzw. rückwärts in Bezug auf eine Fahrtrichtung eines Fahrzeugs- bestimmt die Art der Beschleunigung im Sinne einer Geschwindigkeitserhöhung bzw. einer Geschwindigkeitsreduktion.

Das als Reaktionsschiene ausgebildete Primärteil ist für die Ausbildung der notwendigen Wirbelströme I aus einem elektrisch leitenden Material hergestellt; beispielsweise kann die Reaktionsschiene aus Kupfer oder dem dazu vergleichsweise schlechter leitenden Aluminium hergestellt sein, welches mit Vorteil deutlich leichter und auch preiswerter ist; auch andere elektrisch leitende Materialen können zum Einsatz gelangen.

Die vorliegend einfache Ausführung der Teilsysteminstallation hinsichtlich des Primärteils, nämlich als einfache Reaktionsschiene, erlaubt nun die Ausstattung einer gesamten Fahrstrecke eines herkömmlichen Fahrgeschäfts mit einer solchen Reaktionsschiene, womit die Fahrzeuggeschwindigkeit permanent steuerbar ist.

Gegenüber dem Stand der Technik stellt die Erfindung nun erstmalig einen Linearantrieb zur Verfügung, dessen Gesamtsysteminstallation markant einfacher ausführbar ist und bei dessen Betrieb sich der Energieverbrauch nicht mehr nur auf herkömmliche einzelne Beschleunigungsstreckenabschnitte konzentrieren muss, sondern über die gesamte Fahrstrecke verteilbar ist.

Bei der Erfindung ist vorgesehen, dass das Sekundärteil das erste magnetische Rad und ein parallel dazu angeordnetes zweites magnetisches Rad umfasst, wobei die mindestens eine erste Reaktionsschiene zwischen dem ersten magnetischen Rad und dem zweiten magnetischen Rad angeordnet ist und mit beiden Rädern magnetisch wirkverbunden ist, wie oben beschrieben. Dabei sind das Sekundärteil sowie das erste magnetische Rad und das zweite magnetische Rad horizontal angeordnet und das Sekundärteil ist mit einem Rotationsantrieb mechanisch verbunden.

Nach der Erfindung ist vorgesehen, dass die Magnete auf einer der Reaktionsschiene zugewandten Seite des ersten magnetischen Rads und des zweiten magnetischen Rads angeordnet sind. Dabei ist vorgesehen, dass einander gegenüberstehende Magnete am ersten und zweiten Rad eine unterschiedliche Polung aufweisen und benachbarte Magnete auf einem jeweiligen Rad ebenso.

Bei einer Ausführungsform der Erfindung ist vorgesehen, dass das Primärteil ortsfest angeordnet ist und das Sekundärteil beweglich. Ferner kann bei einer weiteren Ausführungsform vorgesehen sein, dass das Sekundärteil ortsfest angeordnet ist und das Primärteil beweglich. Mit Vorteil sind die Magnete bei einer weiteren Ausführungsform als Permanentmagnete ausgebildet, oder die Magnete sind als fremderregte Elektromagnete ausgebildet.

Zecks Erhöhung der magnetischen Wirkung kann ferner vorgesehen sein, dass die als fremderregte Elektromagnete ausgebildeten Magnete einen Ferritkern umfassen.

Eine vorteilhafte Ausführungsform sieht vor, dass das Sekundärteil und der Rotationsantrieb auf einer Antriebsplattform angeordnet sind, wodurch eine möglichst kompakte Einheit bereitstellbar ist.

Vorteilhafterweise weist der Linearantrieb in einer Ausführungsform eine magnetische Wirkverbindung zwischen dem Primärteil und dem Sekundärteil als eine asynchrone Kopplung auf, wobei im Primärteil eine Anzahl Wirbelströme I induzierbar sind.

Bei einer weiteren vorteilhaften Ausführungsform der Erfindung ist vorgesehen, dass das Primärteil die mindestens eine Reaktionsschiene und parallel dazu eine mindestens zweite Reaktionsschiene umfasst, welche mit dem Sekundärteil magnetisch in Wirkverbindung stehen, wobei das Sekundärteil das erste und das zweite magnetische Rad und zudem mindestens ein drittes magnetisches Rad umfasst; durch diese Parallelanordnung zweier -oder gegebenenfalls mehrerer- Reaktionsschienen, kann in einer konzentrierten Bauform die Gesamtsystemleistung erhöht werden.

Ferner kann bei einer weiteren Ausführungsform des erfindungsgemäßen Linearantriebs vorgesehen sein, den Rotationsantrieb als eine elektrische oder als eine hydraulische oder als eine pneumatische Maschine auszubilden oder dass der Rotationsantrieb als ein kombinierter Antrieb aus der Gruppe elektrischer, hydraulischer oder pneumatischer Maschinen ausbildbar ist.

Weitere Ausführungsformen des erfindungsgemäßen Linearantriebs und deren zugehörigen Vorteile sind Gegenstand der detaillierten Beschreibung und der Figuren.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen versehen. An dieser Stelle wird darauf hingewiesen, dass die Figuren keine einschränkende Wirkung auf den vorliegenden Erfindungsgegenstand als solches haben, sondern lediglich exemplarische Ausführungsformen des Erfindungsgedankens -wie dieser sich in den Ansprüchen darstellt- zeigen.

Es zeigen rein schematisch die
Fig.1a, 1b und 1c einen nicht erfindungsgemäßen Linearantrieb mit einem als Reaktionsschiene ausgebildeten Primärteil und ein Sekundärteil, welches ein erstes magnetisches Rad, bzw. ein erstes und ein zweites magnetisches Rad umfasst, die in Fig. 1c detaillierter dargestellt sind;
Fig. 2a bis Fig. 2c Ausführungsformen des Linearantriebs basierend auf Fig. 1a mit unterschiedlich ausgestatteten magnetischen Tragrädern;
Fig. 3 eine weitere Ausführungsform des Linearantriebs gemäss Fig. 1a, wobei dieser auf einer Antriebplattform eines -nicht näher dargestellten- Fahrzeugs angeordnet ist, und
Fig. 4a, 4b, 4c Ausführungsformen des erfindungsgemäßen Linearantriebs basierend auf Fig. 1a, wobei dessen magnetische Tragräder vorliegend horizontal angeordnet sind.

### Wege zur Ausführung der Erfindung

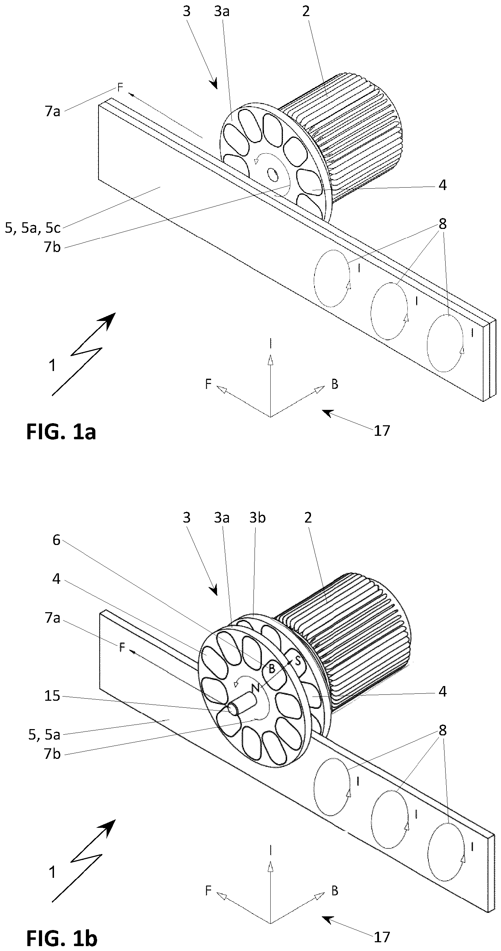

Fig. 1a zeigt eine Ausführungsform eines Teil eines Linearantriebs 1 in einer perspektivischen Draufsicht, die zwar nicht erfindungsgemäß ist, jedoch zum Verständnis des Linearantriebs nach der Erfindung hilfreich ist. Der dargestellte Teil des Linearantriebs 1 umfasst im Wesentlichen mindestens ein als eine Reaktionsschiene 5a ausgebildetes Primärteil 5 mit einer Rückschlussplatte 5c, ferner ein Sekundärteil 3, von dem ein erstes magnetisches Rad 3a gezeigt ist und ein Rotationsantrieb 2, der mechanisch mit dem ersten magnetischen Rad 3a verbunden ist. Das erste magnetische Rad 3a ist mit Magneten 4 bestückt, und zwar derart, dass diese Magnete 4 ein die Reaktionsschiene 5a durchdringendes magnetisches Feld erzeugen und in dieser Reaktionsschiene 5a eine Anzahl Wirbelströme I 8 induzieren, welche mit dem magnetischen Feld wechselwirken, wobei sich das magnetische Feld in bekannter Weise über die Rückschlussplatte 5c des Primärteils 5 schliesst.

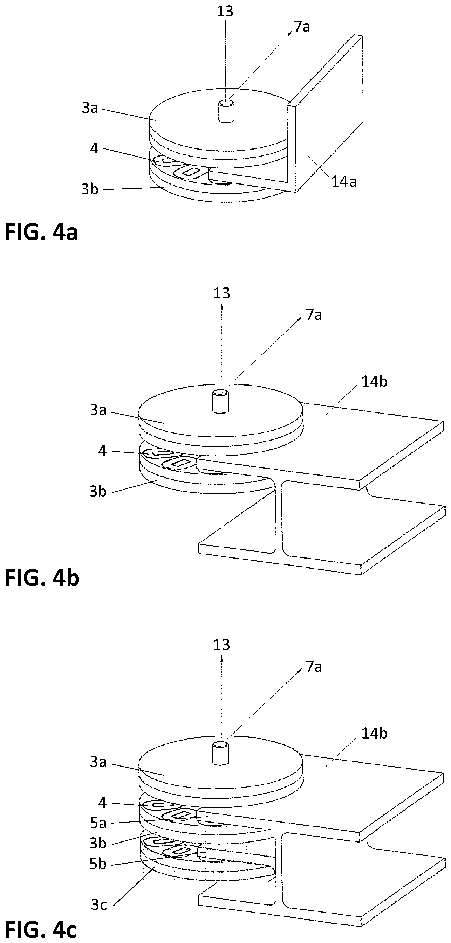

In der Fig. 1b ist der ebenfalls nicht erfindungsgemäße, jedoch zum Verständnis des erfindungsgemäßen Linearantriebs hilfreiche Linearantrieb 1 gezeigt, wobei zusätzlich zu dem ersten magnetische Rad 3a mindestens ein zweites magnetisches Rad 3b des Sekundärteils 3 dargestellt ist, wobei das erste und das zweite magnetische Rad 3a, 3b auf einer gemeinsamen Achse 15 des Rotationsantriebs 2 parallel zueinander angeordnet sind, und wobei das erste und das zweite magnetische Rad 3a, 3b auf dieser Achse 15 derart voneinander beabstandet sind, dass dazwischen die mindestens eine erste Reaktionsschiene 5 magnetisch wirkverbunden anordenbar ist. Nach der Erfindung sind das Sekundärteil 3 sowie das erste magnetische Rad 3a und das zweite magnetische Rad 3b horizontal angeordnet, wie in den Figuren 4a bis 4c genauer dargestellt ist.

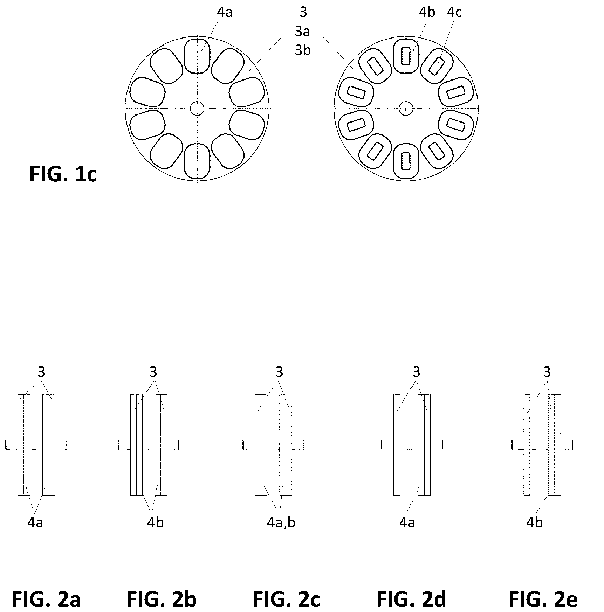

Das erste und/oder das zweite magnetische Rad 3a, 3b ist/sind mit Magneten 4 bestückt, und zwar derart, dass diese Magnete 4 das magnetische Feld B 6 zwischen diesem ersten und diesem zweiten magnetischen Rad 3a, 3b erzeugt, welches magnetische Feld B 6 ebenfalls die Reaktionsschiene 5a durchdringt und dabei mit dieser wechselwirkt. Fig. 1c zeigt ergänzend hierzu mögliche Anordnungen der Magnete 4 an dem ersten und dem zweiten magnetischen Rad 3a, 3b. Vorliegend ist das Sekundärteil 3 in Fig. 1c in einer Draufsicht auf das erste magnetisches Rad 3a und auf das zweite magnetisches Rad 3b gezeigt, wobei an einem der beiden die Magnete 4a als Permanentmagnete 4a ausgebildet sind und am anderen als Elektromagnete 4b, gegebenenfalls mit einem jeweiligen Ferritkern 4c. Bei der Auslegung des Linearantriebs 1 ist zu bestimmen, welche Art von Magneten 4 zum Einsatz gelangen, Permanentmagnete 4a und/oder Elektromagnete 4b mit oder ohne Ferritkern 4c. In diesem Zusammenhang ist ein Blick auf die Fig. 2a bis 2c ergänzend hilfreich: So ist nämlich in Fig. 2a das Sekundärteil 3 in einer Seitenansicht vereinfacht dargestellt, wobei hier einander zugewandte Permanentmagnete 4a zum Einsatz gelangen, in Fig. 2b einander zugewandte Elektromagnete 4b, in Fig. 2c einander zugewandte Permanentmagnete 4a und Elektromagnete 4b. Hinlänglich bekannt ist, dass zwecks erwartetem magnetischem Feld B 6 in Fig. 1b, jeweils benachbarte Magnete 4 auf dem jeweiligen ersten oder zweiten magnetischen Rad 3a, 3b, eine unterschiedliche Polarität aufweisen und ebenso einander gegenüberliegende Magnete 4 zum einen auf dem ersten magnetischen Rad 3a und zum anderen auf dem zweiten magnetischen Rad 3b, sofern denn beide mit Magneten 4 ausgestattet sind wie in den Fig. 2a bis 2c beispielhaft gezeigt. In Fig. 1b ist das magnetische Feld B 6 anhand eines Beispiels gezeigt, welches magnetische Feld B 6 zwischen dem ersten und dem zweiten Rad 3a, 3b durch die beiden zugehörigen Magnete 4 mit den Polaritäten "N" bzw. "S" erzeugt wird. In Umfangsrichtung des ersten und des zweiten magnetischen Rads 3a, 3b wechselt die Richtung des magnetischen Feldes B 6 zum jeweils benachbarten Magnet 4, wobei dies vorliegend der Einfachheit halber nicht explizit dargestellt ist; allerdings sind solche Magnetanordnungen im technischen Gebiet der elektrischen Maschinen hinreichend bekannt, sodass solche Magnetanordnungen auch ohne detailliertere bildliche Darstellung als aus den vorliegenden Figuren -unmittelbar und eindeutigbekannt voraussetzbar sind.

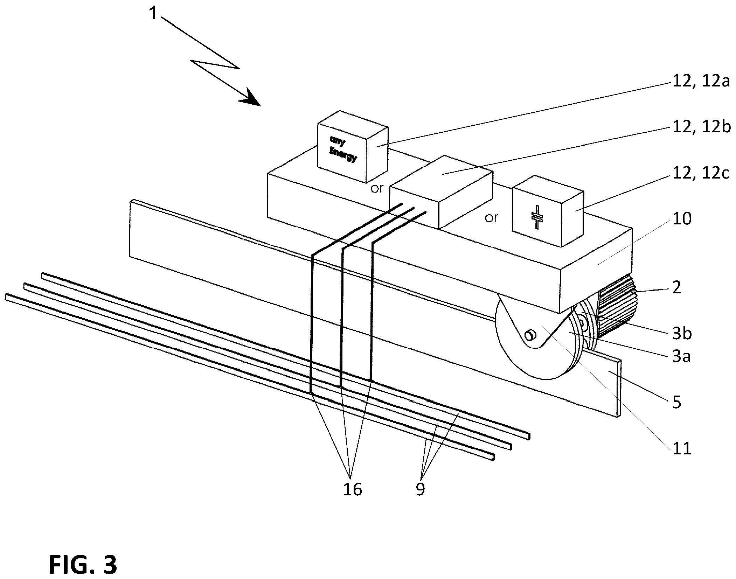

Bei Inbetriebnahme des Linearantriebs 1 wird mit dem Rotationsantrieb 2 das Sekundärteil 3 in eine rotierende Bewegung mit der Drehrichtung 7b versetzt, womit die Magnete 4 periodisch in den Bereich der Reaktionsschiene 5a eindrehen und wieder herausdrehen. Dabei entstehen in der Reaktionsschiene 5a Wirbelströme 8, deren Stromrichtungen sich aus den Richtungen des jeweiligen magnetischen Feldes B 6 ergeben; jeder induzierte Wirbelstrom 8 ist dabei so ausgerichtet, dass das hierdurch induzierte Wirbelstrommagnetfeld dem magnetischen Feld B 6 entgegenzuwirken versucht, wobei eine abstossende Kraft mit der Kraftrichtung 7a resultiert und das Sekundärteil 3 gegenüber dem Primärteil 5 translatorisch angetrieben wird. Das Koordinatensystem 17 in Fig. 1a verdeutlicht hier nochmals die zueinander senkrecht ausgerichtete Stromrichtung der Wirbelströme I 8 zum magnetischen Feld B 6 und die resultierende Kraftrichtung F 7a, die für den translatorischen Antrieb sorgt. Eine notwendige Energieversorgung des Rotationsantriebs 2 ist hier nicht näher gezeigt; für diese Energieversorgung des Rotationsantriebs 2 kann eine elektrische Versorgung vorgesehen sein, eine hydraulische oder eine pneumatische oder gar eine Kombination aus zwei oder drei der genannten Energieversorgungsmöglichkeiten. In Figur 3 ist gezeigt, dass das Sekundärteil 3 des Linearantriebs 1 mit dem Rotationsantrieb 2 an einem Trägerrahmen 11 einer Antriebsplattform 10 eines hier nicht näher gezeigten Fahrzeugs angeordnet ist, wobei über eine Anzahl Stromabnehmer 16 an Stromschienen 9 eine Energieversorgung 12, 12b des Linearantriebs 1 auf der Antriebsplattform 10 erfolgen kann. Weitere Beispiele für Energieversorgungen 12a oder 12c sind hier zusätzlich symbolisch angedeutet, eine nähere Erläuterung derselben erscheint mit Blick auf fachmännisches Wissen nicht notwendig.

Der guten Ordnung halber sei an dieser Stelle angemerkt, dass es -ohne den Erfindungsgedanken zu verlassen- wahlweise möglich ist, das Primärteil 5 oder das Sekundärteil 3 ortsfest auszuführen und das jeweils andere Teil beweglich. Selbstverständlich ist im Fahrbetrieb auch denkbar, durch einen Drehrichtungswechsel des Rotationsantriebs 2 eine Bremsung einzuleiten und -sofern Elektromagnete 4b am Sekundärteil 3 angeordnet sind- auch eine zumindest teilweise Rekuperation der Bremsenergie vorzunehmen.

Die Fig. 4a und 4b zeigen Beispiele des erfindungsgemäßen Linearantriebs 1, bei dem eine horizontale Anordnung des Sekundärteils 3 bzw. des ersten und zweiten magnetischen Rads 3a, 3b vorliegt. In Fig. 4a dient beispielsweise ein Schenkel eines L-Profil-Trägers 14a als Reaktionsschiene und in Fig. 4b ein Schenkel eines H-ProfilTrägers 14b. Abgesehen von der anhand der Fig. 1a diskutierten Funktionsweise für den translatorischen Antrieb in Kraftrichtung F 7a, siehe auch Fig. 1a, resultiert im Betrieb eine weitere Kraft, namentlich eine Hubkraft mit einer Hubkraftrichtung 13, die -wie hier gezeigt- für das erste und das zweite Rad 3a, 3b eine Anhebung gegenüber dem ortsfesten L-Profil-Träger 14a bzw. gegenüber dem ortsfesten H-Profil-Träger 14b bedeutet. Bei einer entsprechenden Dimensionierung und Ausgestaltung ist somit ein Anheben eines Fahrzeugs denkbar, womit nicht nur der Energiebedarf bei laufendem Betrieb reduzierbar ist, sondern zudem der Verschleiss, insbesondere in Bereichen hoher Fahrzeuggeschwindigkeiten. Rein informatorisch sei angemerkt, dass mit dem erfindungsgemäßen Linearantrieb Fahrzeuggeschwindigkeiten erzielbar sind, die deutlich über 200 Stundenkilometern liegen.

Die Fig. 4c zeigte eine weitere Ausführungsform der Erfindung, bei welcher im Vergleich zu der Ausführungsform in Fig. 4b, eine weitere, parallel zur ersten Reaktionsschiene 5a angeordnete, zweite Reaktionsschiene 5b gezeigt ist, die mit einem weiteren magnetischen Rad 3c in Wirkverbindung steht.

### Bezugszeichenliste

- 1: Linearantrieb
- 2: Rotationsantrieb
- 3, 3a, 3b, 3c: Sekundärteil; erstes, zweites, drittes magnetisches Rad
- 4, 4a, 4b: Magnete, Permanentmagnete, Elektromagnete, mit N=Nordpol und S=Südpol
- 4c: Ferritkern für Elektromagnete
- 5, 5a, 5b, 5c: Primärteil, erste bzw. zweite Reaktionsschiene, Rückschussplatte
- 6: magnetisches Feld B, mit N=Nordpol und S=Südpol
- 7a: Kraftrichtung (F) von 3, translatorisch
- 7b: Drehrichtung von 3
- 8: Wirbelströme I in 5
- 9: Stromschienen zur Speisung von 2
- 10: Antriebsplattform (für ein Fahrzeug)
- 11: Trägerrahmen
- 12, 12a, 12b, 12c: Energieversorgung
- 13: Hubkraftrichtung (Levitation)
- 14a: L-Profil-Träger für 5
- 14b: H-Profil-Träger für 5
- 15: Achse
- 16: Stromabnehmer an 9
- 17: Koordinatensystem

## Patentansprüche

1. Linearantrieb (1), umfassend ein Primärteil (5) und ein hierzu magnetisch in Wirkverbindung stehendes Sekundärteil (3), wobei das Primärteil (5) mindestens eine erste elektrisch leitende Reaktionsschiene (5a) und das Sekundärteil (3) eine Anzahl Magnete (4) umfasst, wobei das Sekundärteil (3) ein erstes magnetisches Rad (3a) und mindestens ein hierzu parallel angeordnetes, zweites magnetisches Rad (3b) umfasst und die Anzahl Magnete (4) an dem ersten magnetischen Rad (3a) und dem zweiten magnetischen Rad (3b) angeordnet sind, wobei die mindestens eine erste Reaktionsschiene (5a) zwischen dem ersten magnetischen Rad (3a) und dem zweiten magnetischen Rad (3b) angeordnet ist und mit diesen magnetisch wirkverbunden ist, wobei das Sekundärteil (3) mit einem Rotationsantrieb (2) mechanisch verbunden ist, so dass, bei Inbetriebnahme des Linearantriebs (1), in der Reaktionsschiene (5a) durch Rotation des Sekundärteils Wirbelströme (8) entstehen, wobei eine Antriebskraft (7a) resultiert, wobei das Sekundärteil (3) relativ zum Primärteil (5) translatorisch angetrieben wird, **dadurch gekennzeichnet, dass** das Sekundärteil (3) sowie das erste magnetische Rad (3a) und das zweite magnetische Rad (3b) horizontal angeordnet sind, so dass, bei Inbetriebnahme des Linearantriebs (1), neben der translatorischen Antriebskraft (7a) eine weitere Hubkraft (13) resultiert, die zu einer Anhebung der ersten und zweiten Räder (3a, 3b) gegenüber dem Primärteil (5) führt.

2. Linearantrieb (1) nach Anspruch 1, **dadurch gekennzeichnet, dass** das Primärteil (5) neben der mindestens einen ersten Reaktionsschiene (5a) parallel dazu mindestens eine zweite Reaktionsschiene (5b) aufweist, und das Sekundärteil (3) neben dem mindestens einen ersten magnetischen Rad (3a) und dem mindestens einen zweiten magnetischen Rad (3b) ein zu beiden parallel angeordnetes, drittes magnetisches Rad (3c) umfasst, wobei die mindestens eine zweite Reaktionsschiene (5b) zwischen dem zweiten magnetischen Rad (3b) und dem dritten magnetischen Rad (3c) angeordnet ist und mit letzteren magnetisch wirkverbunden ist.

3. Linearantrieb (1) nach Anspruch 2, **dadurch gekennzeichnet, dass** an dem mindestens einen zweiten magnetischen Rad (3b) und/oder an dem dritten magnetischen Rad (3c) eine Anzahl Magnete (4) angeordnet sind.

4. Linearantrieb (1) nach einem der Ansprüche 1 bis 3, **dadurch gekennzeichnet, dass** das Primärteil (5) ortsfest angeordnet ist und das Sekundärteil (3) beweglich.

5. Linearantrieb (1) nach einem der Ansprüche 1 bis 3, **dadurch gekennzeichnet, dass** das Sekundärteil (3) ortsfest angeordnet ist und das Primärteil (5) beweglich.

6. Linearantrieb (1) nach einem der vorhergehenden Ansprüche, **dadurch gekennzeichnet, dass** die Magnete (4) als Permanentmagnete ausgebildet sind.

7. Linearantrieb (1) nach einem der vorhergehenden Ansprüche 1 bis 6, **dadurch gekennzeichnet, dass** die Magnete (4) als fremderregte Elektromagnete ausgebildet sind.

8. Linearantrieb (1) nach Anspruch 7, **dadurch gekennzeichnet, dass** die als fremderregte Elektromagnete ausgebildeten Magnete (4) einen Ferritkern (4c) umfassen.

9. Linearantrieb (1) nach einem der vorhergehenden Ansprüche, **dadurch gekennzeichnet, dass** das Sekundärteil (3) und der Rotationsantrieb (2) auf einer Antriebsplattform (10) angeordnet sind.

10. Linearantrieb (1) nach einem der vorhergehenden Ansprüche, **dadurch gekennzeichnet, dass** der Rotationsantrieb (2) als eine elektrische oder als eine hydraulische oder als eine pneumatische Maschine ausgebildet ist oder dass der Rotationsantrieb (2) als ein kombinierter Antrieb aus der Gruppe elektrischer, hydraulischer oder pneumatischer Maschinen ausgebildet ist.

## Claims

1. Linear drive system (1), comprising a primary part (5) and a secondary part (3) that is magnetically coupled to the primary part, wherein the primary part (5) includes at least one first electrically conductive reaction rail (5a), and the secondary part (3) includes a number of magnets (4), wherein the secondary part (3) includes a first magnetic wheel (3a) and at least one second magnetic wheel (3b) arranged parallel to the first, with the number of magnets (4) positioned on both the first magnetic wheel (3a) and the second magnetic wheel (3b), wherein the at least one first reaction rail (5a) is arranged between the first magnetic wheel (3a) and the second magnetic wheel (3b) and magnetically connected to them, wherein the secondary part (3) is mechanically connected to a rotary drive (2), so that, upon activation of the linear drive system (1), eddy currents (8) are generated in the reaction rail (5a) by the rotation of the secondary part, resulting in a driving force (7a), wherein the secondary part (3) is driven translationally relative to the primary part (5), **characterized in that** the secondary part (3), as well as the first magnetic wheel (3a) and the second magnetic wheel (3b), are arranged horizontally, so that, upon activation of the linear drive system (1), in addition to the translational driving force (7a), an additional lifting force (13) is generated, causing the first and second wheels (3a, 3b) to lift relative to the primary part (5).

2. Linear drive system (1) according to claim 1, **characterized in that** the primary part (5) includes, in addition to the at least one first reaction rail (5a), at least one second reaction rail (5b) arranged parallel to the first and the secondary part (3) includes, in addition to the at least one first magnetic wheel (3a) and the at least one second magnetic wheel (3b), a third magnetic wheel (3c) arranged parallel to the first two, wherein the second reaction rail (5b) is positioned between the second magnetic wheel (3b) and the third magnetic wheels (3c) and is magnetically coupled to the latter.

3. Linear drive system (1) according to claim 2, **characterized in that** a number of magnets (4) are arranged on the second magnetic wheel (3b) and/or the third magnetic wheel (3c).

4. Linear drive system (1) according to any one of claims 1 to 3, **characterized in that** the primary part (5) is arranged in a fixed position and the secondary part (3) is movable.

5. Linear drive system (1) according to any one of claims 1 to 3, **characterized in that** the secondary part (3) is arranged in a fixed position and the primary part (5) is movable.

6. Linear drive system (1) according to any one of the preceding claims, **characterized in that** the magnets (4) are designed as permanent magnets.

7. Linear drive system (1) according to any one of the preceding claims 1 to 6, **characterized in that** the magnets (4) are designed as externally excited electromagnets.

8. Linear drive system (1) according to claim 7, **characterized in that** the magnets (4) designed as externally excited electromagnets comprise a ferrite core (4c).

9. Linear drive system (1) according to one of the preceding claims, **characterized in that** the secondary part (3) and the rotary drive (2) are arranged on a drive platform (10).

10. Linear drive system (1) according to any one of the preceding claims, **characterized in that** the rotary drive (2) is designed as an electric or as a hydraulic or as a pneumatic machine, or **in that** the rotary drive (2) is designed as a combined drive from the group of electric, hydraulic or pneumatic machines.

## Revendications

1. Actionneur linéaire (1), comprenant une partie primaire (5) et une partie secondaire (3) en liaison active magnétique avec celle-ci, la partie primaire (5) comprenant au moins un premier rail de réaction (5a) par conduction électrique et la partie secondaire (3) comprenant un certain nombre d'aimants (4), la partie secondaire (3) comprenant une première roue magnétique (3a) et au moins une deuxième roue magnétique (3b) agencée parallèlement à celle-ci et le nombre d'aimants (4) étant agencé sur la première roue magnétique (3a) et la seconde roue magnétique (3b), l'au moins un premier rail de réaction (5a) étant agencé entre la première roue magnétique (3a) et la seconde roue magnétique (3b) et étant relié magnétiquement de manière active à celles-ci, la partie secondaire (3) étant reliée mécaniquement à un actionneur rotatif (2), de sorte que, lors de la mise en service de l'actionneur linéaire (1), des courants de Foucault (8) sont générés dans le rail de réaction (5a) par la rotation de la partie secondaire, une force d'entraînement (7a) en résultant, la partie secondaire (3) étant entraînée en translation par rapport à la partie primaire (5), **caractérisé en ce que** la partie secondaire (3) ainsi que la première roue magnétique (3a) et la deuxième roue magnétique (3b) sont agencées horizontalement, de sorte que, lors de la mise en service de l'actionneur linéaire (1), il en résulte, outre la force d'entraînement en translation (7a), une autre force de levage (13) qui conduit à un soulèvement des première et deuxième roues (3a, 3b) par rapport à la partie primaire (5).

2. Actionneur linéaire (1) selon la revendication 1, **caractérisé en ce que** la partie primaire (5) présente, outre l'au moins un premier rail de réaction (5a), parallèlement à celui-ci, au moins un deuxième rail de réaction (5b), et la partie secondaire (3) comprend, outre l'au moins une première roue magnétique (3a) et l'au moins une deuxième roue magnétique (3b), une troisième roue magnétique (3c) agencée parallèlement à ces deux dernières, l'au moins un deuxième rail de réaction (5b) étant agencé entre la deuxième roue magnétique (3b) et la troisième roue magnétique (3c) et étant relié activement à ces dernières par voie magnétique.

3. Actionneur linéaire (1) selon la revendication 2, **caractérisé en ce qu'**un certain nombre d'aimants (4) sont agencés sur l'au moins une deuxième roue magnétique (3b) et/ou sur la troisième roue magnétique (3c).

4. Actionneur linéaire (1) selon l'une des revendications 1 à 3, **caractérisé en ce que** la partie primaire (5) est agencée de manière fixe et la partie secondaire (3) est mobile.

5. Actionneur linéaire (1) selon l'une des revendications 1 à 3, **caractérisé en ce que** la partie primaire (5) est agencés de manière fixe et la partie secondaire (3) est mobile.

6. Actionneur linéaire (1) selon l'une des revendications précédentes, **caractérisé en ce que** les aimants (4) sont des aimants permanents.

7. Actionneur linéaire (1) selon l'une des revendications précédentes 1 à 6, **caractérisé en ce que** les aimants (4) sont des électroaimants à excitation séparée.

8. Actionneur linéaire (1) selon la revendication 7, **caractérisé en ce que** les aimants (4) conçus comme des électroaimants à excitation séparée comprennent un noyau de ferrite (4c).

9. Actionneur linéaire (1) selon l'une des revendications précédentes, **caractérisé en ce que** la partie secondaire (3) et l'actionneur rotatif (2) sont agencés sur une plateforme d'entraînement (10).

10. Actionneur linéaire (1) selon l'une des revendications précédentes, **caractérisé en ce que** l'entraînement rotatif (2) est conçu comme une machine électrique ou comme une machine hydraulique ou comme une machine pneumatique, ou **en ce que** l'entraînement rotatif (2) est conçu comme un entraînement combiné du groupe des machines électriques, hydrauliques ou pneumatiques.
